# EUROPEAN PATENT SPECIFICATION

(11) **EP 3 170 974 B1**
(45) Date of publication and mention of the grant of the patent: **02.06.2021**
(21) Application number: 16200356.0
(22) Date of filing: 23.11.2016
(51) Int. Cl.: F01D 5/14, F01D 5/20

(54) **TURBINE BLADE WITH AIRFOIL TIP VORTEX CONTROL**
TURBINENSCHAUFEL MIT SPITZENWIRBELVERMINDERUNG
AUBE DE TURBINE AVEC RÉDUCTION DE VORTEX D'EXTRÉMITÉ

(30) Priority: 23.11.2015 US 201562258834 P; 08.02.2016 US 201615018025
(43) Date of publication of application: 24.05.2017
(73) Proprietor: Raytheon Technologies Corporation, Farmington, CT 06032 (US)
(72) Inventor: LEWIS, Scott D., Vernon, CT 06066 (US); LANA, Kyle C., Portland, CT 06480 (US); LILES, Jason David, Port Saint Lucie, FL 34987 (US)
(74) Representative: Dehns

(56) References cited:
- EP-A2- 2 333 242
- WO-A1-2015/094498
- US-A1- 2008 044 291
- US-A1- 2010 303 625

## Description

### BACKGROUND

This disclosure relates generally to gas turbine engines and, more particularly, to rotor blades for gas turbine engines.

Typically, a rotor blade for a gas turbine engine includes an attachment (also referred to as an "attachment region") and an airfoil. The airfoil extends between the attachment and a tip and has a concave pressure side surface, a convex suction side surface, a leading edge and a trailing edge. The airfoil is sized such that when it is configured within the engine, a clearance gap is defined between the blade tip and the surrounding static structure (outer flowpath).

During operation, a stagnation point is formed near the leading edge of the airfoil. A stagnation point may be defined as a point in a flow field where velocity of the airflow is approximately zero. At the stagnation point, the airflow separates into a pressure side airflow and a suction side airflow. The pressure side airflow travels from the stagnation point to the trailing edge. The suction side airflow is accelerated around the leading edge and a portion of the suction side surface until it reaches a point of maximum velocity. Typically, the point of maximum velocity corresponds to a point on the suction side surface where the surface becomes relatively flat as compared to a relatively curved portion of the airfoil proximate the leading edge. Thereafter, the suction side airflow decelerates as it travels from the point of maximum velocity to the trailing edge of the airfoil.

Near the tip of the airfoil, a portion of the pressure side airflow (i.e., a leakage airflow) migrates through the tip clearance gap to the suction side airflow. This leakage airflow mixes with the suction side airflow forming a vortex. The vortex mixes out and disperses, causing relatively significant flow disturbances along the majority of the suction side surface. As a collective result of these flow disturbances, the efficiency of the engine is reduced.

Several approaches have been adopted to try to reduce the detrimental effects associated with leakage airflows. In one approach, the clearance gap is decreased by reducing tolerances between the tip of each rotor blade and the outer flowpath. This approach has met with limited success because the tolerances must still account for thermal and centrifugal expansion of materials to prevent interference. In another approach, a shroud is attached to the tips of the rotor blades. Although air may still leak between the shroud and the outer, static flowpath, the vortex induced losses are reduced. A downside to this approach is that a shroud typically adds a significant amount of mass to the rotor, which may limit rotor operational speeds and temperatures.

Accordingly, it is desirable to provide turbine airfoils and/or engines with airfoils that reduce the detrimental effects associated with leakage airflows.

EP 2333242 A2 discloses a rotor blade for a gas turbine engine having an airfoil stagger angle which changes as the airfoil extends between an attachment of the rotor blade and a tip of the airfoil. This document represents the closest prior art to the present invention. US 2010/303625 A1 discloses a turbine blade including a tip baffle which bifurcates the airfoil tip into two pockets with a first pocket being laterally open at its aft end. WO 2015/094498 A1 discloses a turbine blade having a shelf formed in the tip, the shelf extending from the pressure side wall, around the leading edge, to the suction side wall.

### BRIEF DESCRIPTION

According to the invention as defined by appended independent claim 1, there is provided a rotor blade for a gas turbine engine, comprising: an attachment; an airfoil extending from the attachment to a tip, wherein the airfoil has a stagger angle that changes as the airfoil extends between the attachment and the tip, the airfoil further comprising a base region disposed adjacent to the attachment, a tip region, and a transition region located between the base region and the tip region; wherein a rate of the change of the stagger angle in the transition region is greater than a rate of the change of the stagger angle in the base region; wherein the rate of the change of the stagger angle in the transition region is greater than a rate of change of the stagger angle in the tip region; and wherein the airfoil has a chord that increases as the airfoil extends from the base region to the tip; wherein a squealer pocket is located in a surface of the tip, the squealer pocket being surrounded by a wall located between the squealer pocket and a leading edge, trailing edge, pressure side and suction side of the airfoil, wherein a first surface of the wall has a convex configuration with respect to the pressure s ide of the airfoil as it extends from a leading edge to a trailing edge of the airfoil and wherein the squealer pocket comprises a plurality of cooling openings.

The squealer pocket may be at least partially surrounded by a second surface of a wall located between the squealer pocket and a suction side of the airfoil, wherein the second surface of the wall has a convex configuration with respect to the suction side of the airfoil as it extends from the leading edge to the trailing edge of the airfoil.

The first surface and the second surface may be in a facing spaced relationship with respect to each other and the squealer pocket is located between the first surface and the second surface.

The second surface may be partially curved and parallel to the suction side of the airfoil proximate to the tip.

The tip region may have a substantially planar pressure side surface.

The tip region may have a chord line and a pressure side surface, and wherein the chord line is substantially parallel to the pressure side surface.

The chord may increase as the airfoil extends from the attachment to the tip.

The chord may change as the airfoil extends between the attachment and the tip, wherein a rate of change of the chord in the transition region is greater than a rate of change of the chord in the base region, and wherein the rate of change of the chord in the transition region is greater than a rate of change of the chord in the tip region.

The airfoil may have a span, and wherein the tip region has a height equal to or less than approximately 25 percent of the span.

The airfoil may have a span, and wherein the transition region has a height equal to approximately 25 percent of the span.

The airfoil may have a span, and wherein the base region has a height equal to approximately 50 percent of the span.

According to a further aspect of the invention, there is provided a gas turbine. The gas turbine engine having: a compressor section; a combustor section; and a turbine section; wherein the turbine section includes a plurality of rotors having a plurality of radially disposed rotor blades at least some of the plurality of radially disposed rotor blades according to any of the foregoing embodiments of the invention, which is solely defined by appended claims.

### BRIEF DESCRIPTION OF THE DRAWINGS

The subject matter which is regarded as the present invention is solely defined by appended independent claim 1.
FIG. 1 is a cross-sectional view of a gas turbine engine;
FIG. 2 is a diagrammatic illustration of a rotor blade for the gas turbine engine in FIG. 1;
FIG. 3 is a diagrammatic illustration of a cross-sectional slice of an airfoil;
FIG. 4 is a diagrammatic illustration of cross-sectional slices of an airfoil;
FIG. 5A is a graph illustrating stagger angle rates of change of the airfoil between an attachment and a tip;
FIG. 5B is a graph illustrating chord rates of change of the airfoil between the attachment and the tip;
FIG. 6 is a diagrammatic illustration of airflow characteristics of a tip region of the airfoil in FIGS. 2 and 4;
FIG. 7 is a diagrammatic illustration of airflow characteristics of a prior art rotor blade near a tip thereof;
FIG. 8 is top view of a tip of a rotor blade;
FIG. 9 is a view along lines 9-9 of FIG. 8;
FIG. 10 is top view of a tip of a rotor blade;
FIG. 11 is a view along lines 11-11 of FIG. 10;
FIGS. 12 and 13 are perspective views of a tip of a rotor blade;
FIG. 14 is a cross-sectional of the tip of the rotor blade illustrated in FIGS. 12 and 13;
FIG. 15 is top view of a tip of a rotor blade;
FIG. 16 is a view along lines 16-16 of FIG. 15; and
FIG. 17 is a perspective view of a tip of a rotor blade.

The drawings respectively show embodiments which comprise part of the features of the present invention, but which, by themselves, do not form part of the present invention since they do not comprise all features of appended independent claim 1.

### DETAILED DESCRIPTION

Various embodiments are described in the following which are related to turbine blades with airfoil tip vortex control. These embodiments may be embodiments which fall into the scope of the present invention, if they comprise all features of appended independent claim 1, or they may be embodiments which are merely helpful to understand the present invention. In particular, various embodiments described in the following are related to the aforementioned turbine blades with airfoil tip vortex control configured for use in gas turbine engines and methods for cooling the blade tips of the airfoils. Although engine airfoils are discussed herein, it is understood that embodiments of this disclosure may be applied on any turbomachinery component that requires airfoil tip vortex control These turbine blades fall into the scope of the present invention as long as they are rotor blades comprising all features of appended independent claim 1.

In accordance with various embodiments, which either form part of the present invention or, alternatively, which do not form part of the present invention but which are helpful to understand the present invention, a rotor blade for a gas turbine engine is provided. The rotor blade having an airfoil extending from an attachment to a tip and a squealer pocket and optionally a tip shelf located in a surface of the tip; and the airfoil also has a stagger angle that changes as the airfoil extends between the attachment and the tip. For forming part of the present invention, it is required that the embodiment furthermore comprises also all other features of appended independent claim 1. In addition, the squealer pocket and the optional tip shelf may be of any size and aspect ratio along the tip chord.

Various embodiments may be applied on any turbomachinery component that requires airfoil tip vortex control. For example, gas turbine engines are rotary-type combustion turbine engines built around a power core made up of a compressor, combustor and turbine, arranged in flow series with an upstream inlet and downstream exhaust. The compressor compresses air from the inlet, which is mixed with fuel in the combustor and ignited to generate hot combustion gas. The turbine extracts energy from the expanding combustion gas, and drives the compressor via a common shaft. Energy is delivered in the form of rotational energy in the shaft, reactive thrust from the exhaust, or both.

Gas turbine engines provide efficient, reliable power for a wide range of applications, including aviation and industrial power generation. Smaller-scale engines such as auxiliary power units typically utilize a one-spool design, with co-rotating compressor and turbine sections. Larger-scale jet engines and industrial gas turbines are generally arranged into a number of coaxially nested spools, which operate at different pressures and temperatures, and rotate at different speeds.

The individual compressor and turbine sections in each spool are subdivided into a number of stages, which are formed of alternating rows of rotor blade and stator vane airfoils. The airfoils are shaped to turn, accelerate and compress the working fluid flow, or to generate lift for conversion to rotational energy in the turbine.

Aviation applications include turbojet, turbofan, turboprop and turboshaft engines. In turbojet engines, thrust is generated primarily from the exhaust. Modern fixed-wing aircraft generally employ turbofan and turboprop designs, in which the low pressure spool is coupled to a propulsion fan or propeller. Turboshaft engines are typically used on rotary-wing aircraft, including helicopters.

Turbofan engines are commonly divided into high and low bypass configurations. High bypass turbofans generate thrust primarily from the fan, which drives airflow through a bypass duct oriented around the engine core. This design is common on commercial aircraft and military transports, where noise and fuel efficiency are primary concerns. Low bypass turbofans generate proportionally more thrust from the exhaust flow, providing greater specific thrust for use on high-performance aircraft, including supersonic jet fighters. Unducted (open rotor) turbofans and ducted propeller engines are also known, in a variety of counter-rotating and aft-mounted configurations.

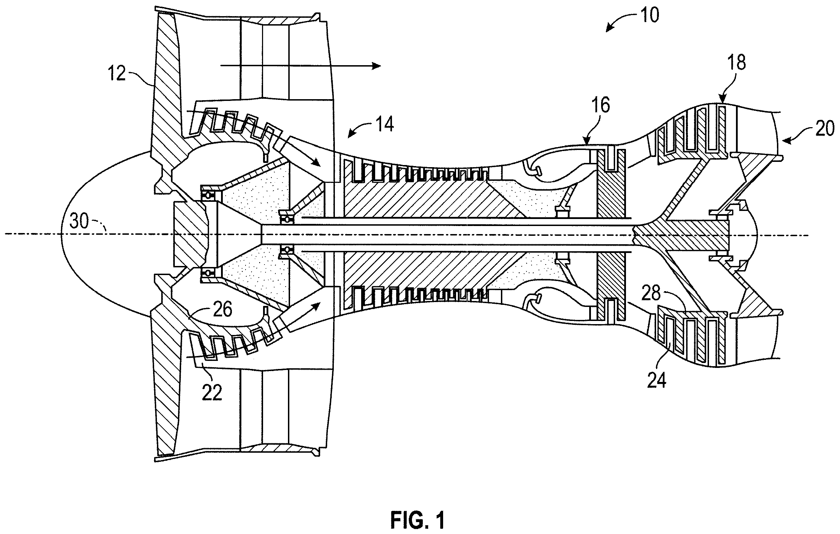

Turbofan engine performance depends on precise control of the working fluid flow, including flow across the airfoil tip. Where clearance, abrasion and temperature effects are of concern, moreover, these factors often pose competing design demands on compressor and turbine rotor geometry, particularly in the tip region of the airfoil. Referring to FIG. 1, a gas turbine engine 10 includes a fan 12, a compressor section 14, a combustor section 16, a turbine section 18, and a nozzle 20. The compressor and turbine sections 14, 18 each include a plurality of stator vane stages 22, 24 and rotor stages 26, 28. Each stator vane stage 22, 24 includes a plurality of stator vanes that guide air into or out of a rotor stage in a manner designed in part to optimize performance of that rotor stage. Each rotor stage 26, 28 includes a plurality of rotor blades attached to a rotor disk. The rotor stages 26, 28 within the compressor and turbine sections 14, 18 are rotatable about a longitudinally extending axis 30 of the engine 10.

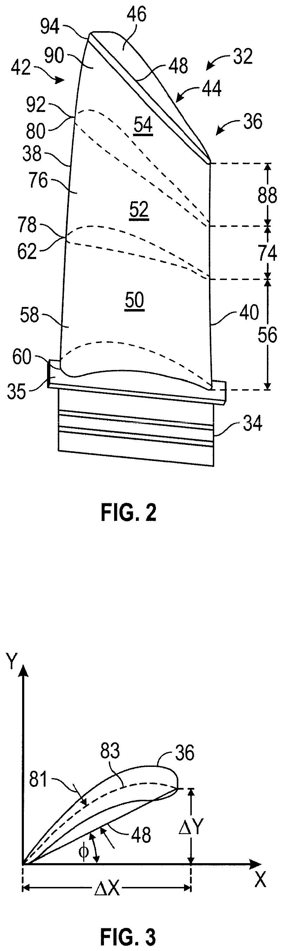

FIG. 2 is a diagrammatic illustration of one rotor blade 32 for use in the turbine section 18 of the gas turbine engine 10. The rotor blade 32 includes an attachment 34, a platform 35, and an airfoil 36. Some embodiments of the rotor blade 32 do not include the platform 35. To simplify the description herein, the attachment 34 may be considered as including the platform 35 for purposes of defining the beginning of the airfoil 36. The rotor blade attachment 34 is adapted to be received within a slot disposed within a rotor disk. Rotor blade attachments are well known in the art, and the present disclosure is not limited to any particular attachment configuration.

The airfoil 36 has a leading edge 38, a trailing edge 40, a pressure side 42, a suction side 44, a stagger angle φ, a chord and a camber line. The stagger angle φ changes as the airfoil 36 extends between the attachment 34 and a tip 46 (e.g., the stagger angle increases in a direction defined by a line that starts at the attachment 34 and travels along the span of the airfoil 36 toward the tip 46). Referring to FIG. 3, the stagger angle φ is defined as the angle between a chord line 48 of the airfoil 36 and an axis (e.g., the longitudinally extending axis 30 of the gas turbine engine 10, etc.). Therefore, the stagger angle φ for one cross-sectional "slice" of the airfoil 36 may be calculated using the following equation: φ_{stagger} = tan⁻¹(ΔY/ΔX) where ΔY is indicative of a distance between tips of the leading and the trailing edges 38, 40 of the airfoil 36 along a y-axis, and ΔX is indicative of a distance between the tips of the leading and the trailing edges 38, 40 of the airfoil 36 along an x-axis. Additionally the chord of the airfoil 36 changes as the airfoil 36 extends between the attachment 34 and the tip 46; e.g., the airfoil chord increases in a direction defined by a line that starts at the attachment 34 and travels along the span of the airfoil 36 toward the tip 46. Referring again to FIG. 2, the airfoil 36 includes a base region 50, a transition region 52 and a tip region 54.

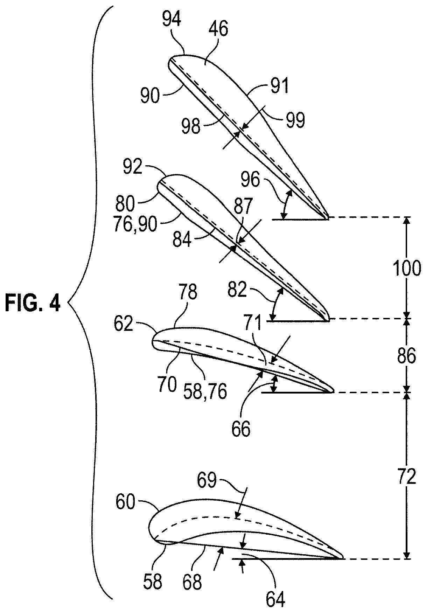

The base region 50 has a base height 56, a pressure side surface 58, and a suction side surface (not shown). The base height 56 extends between a first end 60 (also referred to as a "root") and a second end 62. The root 60 is located at a cross-sectional "slice" of the airfoil 36 where the base region 50 abuts the attachment 34. The second end 62 is located at a cross-sectional "slice" of the airfoil 36 where the base region 50 abuts the transition region 52. In some embodiments, the base height 56 is approximately 50% of the span of the airfoil 36. The root 60 and the second end 62 each have a stagger angle 64, 66, a chord 68, 70 and camber 69, 71. Referring to the embodiment in FIG. 4, the airfoil stagger angle increases within the base region 50 in a direction defined by a line 72 that starts at the root 60 and travels toward the second end 62; i.e., the stagger angle 66 at the second end 62 is greater than the stagger angle 64 at the root 60. The airfoil chord increases within the base region 50 in a direction defined by the line 72 that starts at the root 60 and travels toward the second end 62; i.e., the chord 70 at the second end 62 is greater than the chord 68 at the root 60. One or both the stagger angle rate of change and the chord rate of change within the base region 50 may be constant or may vary. Where either one of the stagger angle and the chord rates of change vary, an average stagger angle rate of change and/or an average chord rate of change may be used to respectively define the above referenced rates of change within the base region 50. The pressure side surface 58 is concave and the suction side surface is convex. In some embodiments, the base region 50 additionally has non-uniform camber. Referring to FIG. 3, camber can be defined as a rise 81 (e.g., distance) between a camber line 83 (also referred to as a "mean camber line") and a chord line 48. For example, referring to the embodiment in FIG. 4, the camber of the base region 50 can decrease in the direction defined by the line 72 such that camber 69 of the root 60 is greater than the camber 71 of the second end 62 The stagger angle of a rotor blade forming part of the invention as defined by appended independent claim 1, has the characteristics as defined in said appended independent claim 1.

Referring to FIG. 2, the transition region 52 has a transition height 74, a pressure side surface 76 and a suction side surface (not shown). The transition height 74 extends between a first end 78 and a second end 80. The first end 78 is located at the same cross-sectional "slice" of the airfoil 36 as the second end 62 of the base region 50. The second end 80 is located at a cross-sectional "slice" of the airfoil 36 where the transition region 52 abuts the tip region 54. In some embodiments, the transition region 52 is approximately 25% of the span of the airfoil 36. The first end 78 and the second end 80 each have a stagger angle 66, 82, a chord 70, 84 and camber 71, 87. Referring to FIG. 4, the airfoil stagger angle increases within the transition region 52 in a direction defined by a line 86 that starts at the first end 78 and travels towards the second end 80; i.e., the stagger angle 82 at the second end 80 is greater than the stagger angle 66 at the first end 78. The airfoil chord increases within the transition region 52 in a direction defined by the line 86 that starts at the first end 78 and travels toward the second end 80; i.e., the chord 84 at the second end 80 is greater than the chord 70 at the first end 78. One or both of the stagger angle rate of change and the chord rate of change within the transition region 52 may be constant or may vary. Where either one or both of the stagger angle and chord rates of change vary, an average stagger angle rate of change and/or an average chord rate of change may be used to respectively define the above referenced rates of change within the base region 50. The pressure side surface 76 is concave and the suction side surface is convex. In some embodiments, the transition region 52 additionally has non-uniform camber. For example, the camber of the transition region 52 can decrease in the direction defined by the line 86 such that the camber 71 of the first end 78 is greater than the camber 87 of the second end 80.

Referring to FIG. 2, the tip region 54 has a tip height 88, a pressure side surface 90 and a suction side surface 91. The tip height 88 extends between a first end 92 and a second end 94 (i.e., the tip 46 of the airfoil 36). The first end 92 is located at the same cross-section "slice" of the airfoil 36 as the second end 80 of the transition region 52. In some embodiments, the tip region 54 is approximately 20-25% of the span of the airfoil 36. The first end 92 and the second end 94 each have a stagger angle 82, 96, a chord 84, 98, and camber 87, 99. Referring to FIG. 4, the airfoil stagger angle increases within the tip region 54 in a direction defined by a line 100 that starts at the first end 92 and travels towards the second end 94; i.e., the stagger angle 96 at the second end 94 is greater than the stagger angle 82 at the first end 92. The airfoil chord increases within the tip region 54 in a direction defined by the line 100 that starts at the first end 92 and travels towards the second end 94; i.e., the chord 98 at the second end 94 is greater that the chord 84 at the first end 92. Notably, one or both of the stagger angle rate of change and the chord rate of change within the tip region 54 may be constant or may vary. Where either one or both of the stagger angle and chord rates of change vary, an average stagger angle rate of change and/or an average chord rate of change may be used to respectively define the above referenced rates of change within the base region 50. The pressure side surface 90 is substantially planar. For example, in one embodiment, a chord line (e.g., the chord line 84, 98) of the tip region 54 is substantially parallel to the pressure side surface 90 between the first and the second ends 92, 94. The suction side surface 91 is generally convex. In some embodiments, the tip region 54 has substantially uniform camber. For example, the camber 87 of the first end 92 may be substantially equal to the camber 99 of the second end 94.

Referring to FIG. 2, the base region 50 is disposed adjacent to the attachment 34. The transition region 52 is located between the base and the tip regions 50, 54. Referring to FIG. 4, the airfoil 36 (i.e., the base, transition and tip regions 50, 52, 54) is configured such that the stagger angle rate of change for the transition region 52 is greater than the stagger angle rates of change for the base and the tip regions 50, 54, respectively. The airfoil 36 is additionally, or alternatively, configured such that the chord rate of change for the transition region 52 is greater than the chord rates of change for the base and the tip regions 50, 54, respectively.

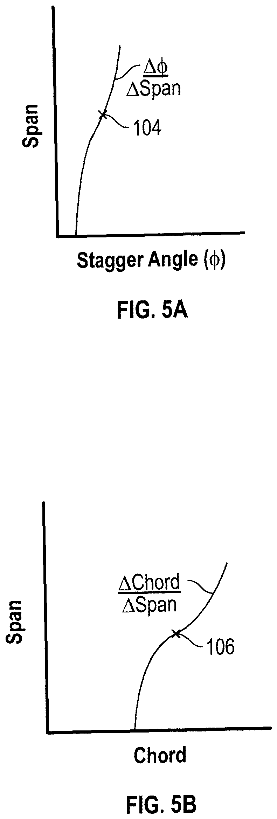

FIG. 5A is a graph illustrating the stagger angle rates of change (i.e., Δ φ / Δ (Span)) of the airfoil 36 between the attachment 34 and the tip 46. The horizontal axis represents the stagger angle (Φ) and the vertical axis represents a distance along the span of the airfoil 36. FIG. 5B is a graph illustrating the chord rates of change (i.e., Δ (Chord)/ Δ (Span)) of the airfoil 36 between the attachment 34 and the tip 46. The horizontal axis represents the chord and the vertical axis represents a distance along the span of the airfoil 36. As illustrated in FIGS. 5A and 5B, the transition region 52 has a point of inflection 104, 106 where the curvatures of the lines change from a negative value to a positive value. Significantly, it is believed that this inflection permits the base and the tip regions 50, 54 to have relatively independent airflow characteristics. That is, for example, the airfoil 36 may be configured such that the base region 50 utilizes typical airflow characteristics, while the tip region 54 utilizes airflow characteristics designed to reduce flow disturbances induced by a leakage airflow. The airflow characteristics of the tip region 54 will be described below in further detail.

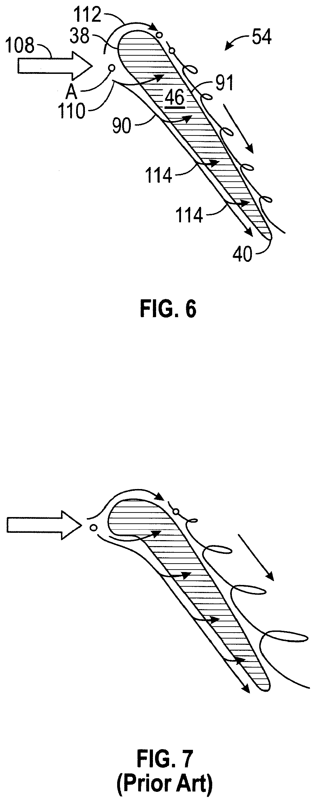

FIG. 6 is a diagrammatic illustration of the tip region 54 of the airfoil 36 in FIGS. 2 and 4. Referring to FIG. 6, in operation, a stagnation point (e.g., point "A") forms within an airflow 108 adjacent the pressure side surface 90 of the tip region 54 proximate the leading edge 38. As set forth above, a stagnation point may be defined as a point in a flow field where velocity of the airflow is approximately zero. At the stagnation point "A", the airflow 108 is divided into a pressure side airflow 110 and a suction side airflow 112.

The pressure side airflow 110 is directed, parallel to the pressure side surface 90, from the stagnation point "A" towards the trailing edge 40. As the pressure side airflow 110 travels towards the trailing edge 40, a portion thereof (i.e., a leakage airflow 114) migrates over the tip 46 of the airfoil 36 from the pressure side airflow 110 to the suction side airflow 112.

The leakage airflow 114 reduces the efficiency of the turbine via the unrealized work extraction that the leakage air represents and also through increased mixing losses as the leakage air is reintroduced with the mainstream suction side flow. The leakage airflow and the manner in which it mixes upon exiting the tip gap on the suction side are a function of the local pressure distribution around the blade tip. In contrast to prior art rotor blades which aim to reduce the tip leakage, the present disclosure does not alter the amount of leakage flow. In contrast, it alters the local pressure distribution to one more favorable for reducing the leakage mixing loss. This substantial reduction in mixing loss leads to a higher efficiency turbine.

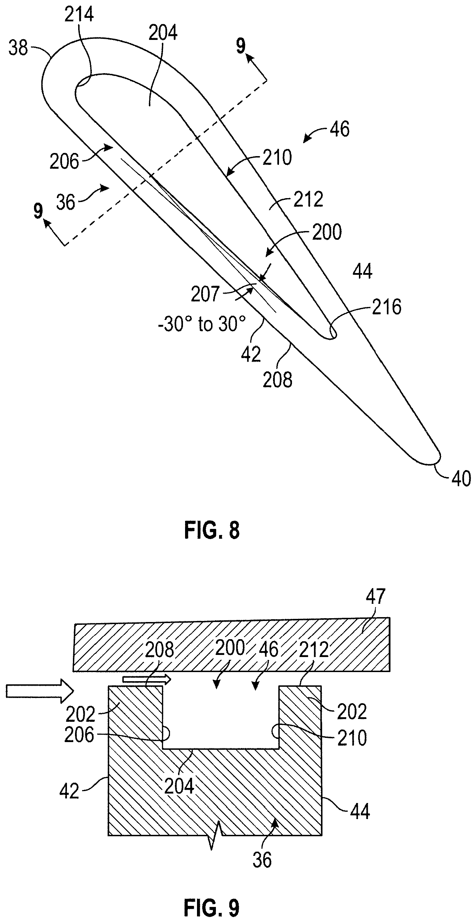

Referring now to FIGS. 8 and 9, a top view of the tip 46 of the airfoil 36 is disclosed. Here tip 46 is configured to have a squealer pocket 200 located in tip 46, as, in combination with further features, required by the present invention defined in appended independent claim 1. The squealer pocket 200 is used in combination with the tip vortex control technology described above with respect to at least FIGS. 1-6. The squealer pocket 200 comprises a cavity located in tip 46 that maintains a region or pocket of cooling fluid (e.g., air) along the tip of the airfoil, between the pressure surface and the suction surface. The squealer pocket according to the present invention additionally has a plurality of cooling openings that are in fluid communication with a cooling fluid in order to provide the cooling air to the pocket 200. The cooling pocket is surrounded by a wall or portion 202 that extends upwardly from a surface 204 of the squealer pocket 200. Wall or portion 202 is located between the leading edge 38, the trailing edge 40, the pressure side 42 and the suction side 44 of the airfoil 36.

An inner surface or first surface 206 of the wall or portion 202 located between at least the pressure side 42 and the squealer pocket 200 extends from surface 204 to a top surface 208 of the wall or portion 202 located between at least the pressure side 42 and the squealer pocket 200. This inner surface 206 is configured to be arranged in, or to have, a convex configuration with respect to the pressure side 42 of the airfoil 36 as it extends from the leading edge 38 to the trailing edge 40 of the airfoil 36. The convex configuration may be represented by an angle 207, which is defined by the intersection of two lines tangent to surface 206 proximate to the apex of the convex portion of surface 206. In one embodiment, this angle may be between approximately 0 degrees and 30 degrees. Of course, angles greater than the aforementioned values are also considered.

In addition, an inner surface or second surface 210 of the wall or portion 202 located between at least the suction side 44 and the squealer pocket 200 extends from surface 204 to a top surface 212 of the wall or portion 202 located between at least the suction side 44 and the squealer pocket 200. This inner surface 206 may also be configured to have a convex shape or have a convex configuration with respect to the suction side 44 of the airfoil 36 as it extends from the leading edge 38 to the trailing edge 40 of the airfoil 36. As illustrated in FIG. 9, these surfaces 206 and 210 may be in a facing spaced relationship with respect to each other and the cavity or squealer pocket 200 and the surface 204 are located therebetween.

Still further, portions 214 and 216 of another inner surface of the wall or portion 202 are located between the squealer pocket 200 and the leading edge 38 and the trailing edge 40 of the airfoil 36. These portions 214, 216 may have a different surface configuration and are located between surfaces 206 and 210.

The combination of the tip vortex control technology described above with respect to at least FIGS. 1-6 and in combination with the squealer pocket 200 reduces the leakage over the turbine blade tip while providing additional performance benefits. In addition to reducing the leakage flow over the tip the squealer pocket 200 also reduces a heat load to the part. The squealer pocket configuration creates an effective labyrinth seal which reduces the amount of tip leakage between the tip 46 and a shroud 47 or blade outer air seal (BOAS), which brings with it a performance benefit. The squealer pocket provides thermal benefits as the pocket itself experiences lower heat transfer coefficients as the pocket acts as a mini-plenum which reduces the velocity of the gas path air in this region. In addition, the surfaces 204, 206 and 210 may be coated with any type of thermal barrier coatings, such as a ceramic coating (e.g., yttria stabilized zirconia), that do not get abraded off (even if a blade tip rub does occur) since they are recessed from the uppermost top tip surfaces. Accordingly, these thermal barrier coatings provide additional thermal benefits.

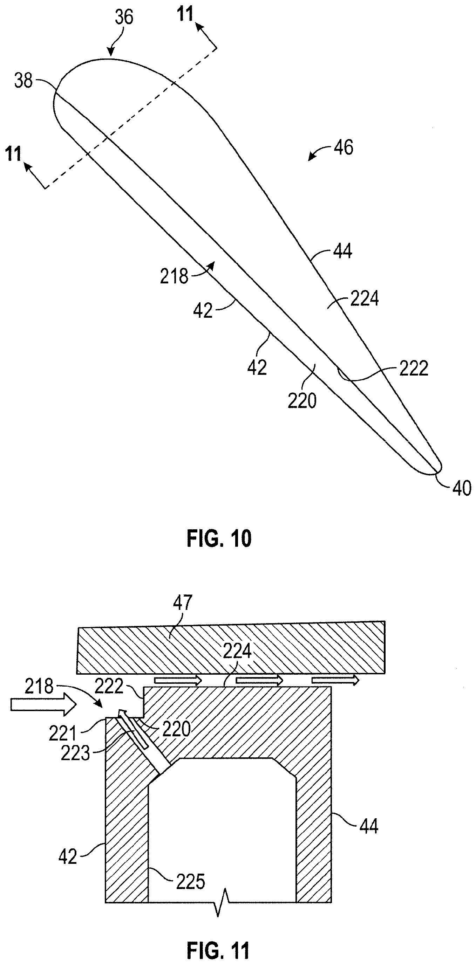

Referring now to at least FIGS. 10 and 11, a top view of the tip 46 of the airfoil is disclosed. Here tip 46 is configured to have a tip shelf 218 located in tip 46 proximate to the pressure surface 42 of the airfoil 36. The tip shelf 218 is used in combination with the tip vortex control technology described above with respect to at least FIGS. 1-6. The tip shelf 218 has a ledge portion 220 extending from the pressure side 42 to a wall portion 222 extending upwardly from the ledge portion 220 to a top surface 224 of the tip 46. The tip shelf 218 may extend from the leading edge 38 to the trailing edge 40. Alternatively, the tip shelf 218 may only extend along a portion of the tip 46 from the leading edge 38 to the trailing edge 40.

The surface of wall portion 222 may be generally flat and straight and is parallel to the pressure side 42 of the airfoil 36 proximate to the tip shelf 218.

The combination of the tip vortex control technology described above with respect to at least FIGS. 1-6 and in combination with the tip shelf 218 reduces the leakage over the turbine blade tip while providing additional performance benefits. The tip shelf shape allows the cooling air to be placed where it is most beneficial and gets rid of a tip edge along the pressure surface of the airfoil that otherwise would be prone to rapid oxidation. The tip shelf 218 may have a plurality of cooling openings 221 that are in fluid communication with a cooling fluid 223 in order to provide cooling air to the tip shelf 218 in order to prevent the deleterious effects of high temperatures at the tip of the airfoil. The cooling openings 221 may be in fluid communication with an internal cooling channel or conduit 225 in fluid communication with a source of cooling air. As mentioned above, the tip shelf 218 also removes the tip edge on the pressure side where the heat transfer coefficient is extremely high and is prone to rapid oxidation.

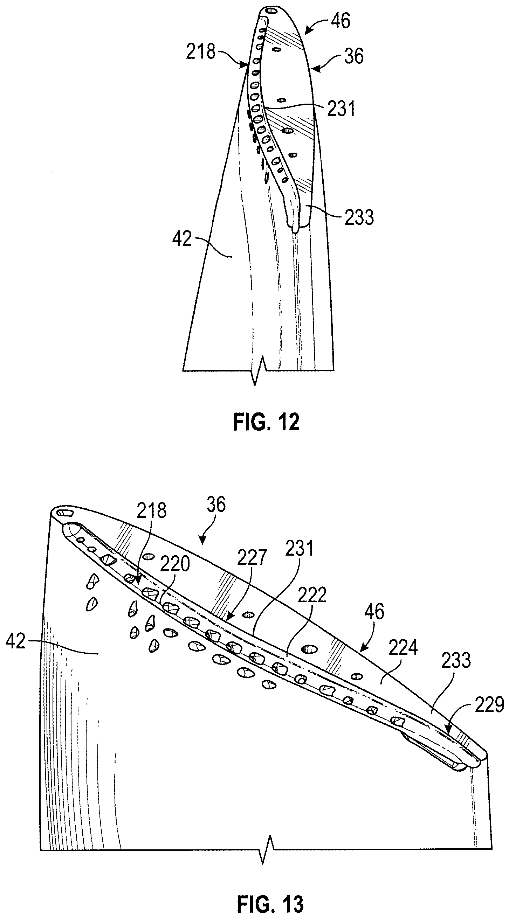

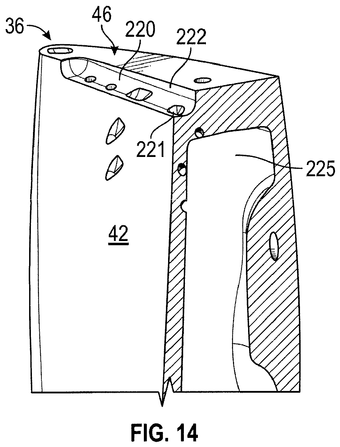

As illustrated in at least FIGS. 12 and 13, a top view of the tip 46 of the airfoil 36 is disclosed. The tip 46 is configured to have a tip shelf 218 located in tip 46 proximate to the pressure surface 42 of the airfoil 36. The tip shelf 218 is used in combination with the tip vortex control technology described above with respect to at least FIGS. 1-6. The tip shelf 218 has a ledge portion 220 extending from the pressure side 42 to a wall portion 222 extending upwardly from the ledge portion 220 to a top surface 224 of the tip 46. The wall portion 222 may have a convex configuration 231 with respect to pressure surface 42. The convex configuration 231 of the wall portion may extend along a portion of the wall portion 222. In one configuration, the convex configuration 231 of the wall portion 222 may extend along more than 50% of the wall portion 222 but not the entire length of the wall portion 222. The convex configuration 231 of the wall portion may extend along the entire portion of the wall portion 222. Of course, any other lengths of the convex configuration 231 with respect to the wall portion 222 are considered to be within the scope of various embodiments of the present disclosure. Alternatively, the wall portion 222 may have a generally straight configuration as shown in FIGS. 10 and 11. Still further, the wall portion 222 may have a convex portion 231 and a concave portion 233. The concave portion 233 is located proximate to the trailing edge 40 of the airfoil 36. In addition, the ledge portion 220 may have localized concave portion 227 as well as a localized convex portion or surface 229, which may result in wall portion 222 having varying heights as it extends upwardly from ledge portion 220. Thus, the tip shelf 218 may have both convex and concave inflections in the surface or ledge portion 220 as well as the wall portion 222. Tip shelf 218 may extend from the leading edge 38 to the trailing edge 40. Alternatively, the tip shelf 218 may only extend along a portion of the tip 46 from the leading edge 38 to the trailing edge 40. FIG. 14 is a partial cross-sectional view of the tip 36 illustrated in FIGS. 12 and 13.

The combination of the tip vortex control technology described above with respect to at least FIGS. 1-6 and in combination with the tip shelf 218 reduces the leakage over the turbine blade tip while providing additional performance benefits. The tip shelf shape allows the cooling air to be placed where it is most beneficial and gets rid of a tip edge along the pressure surface of the airfoil that otherwise would be prone to rapid oxidation. The tip shelf 218 may have a plurality of cooling openings 221 that are in fluid communication with a cooling fluid in order to provide cooling air to the tip shelf 218 in order to prevent the deleterious effects of high temperatures at the tip of the airfoil. The cooling openings 221 may be in fluid communication with an internal cooling channel or conduit 225 in fluid communication with a source of cooling air. As mentioned above, the tip shelf 218 also removes the tip edge on the pressure side where the heat transfer coefficient is extremely high and is prone to rapid oxidation.

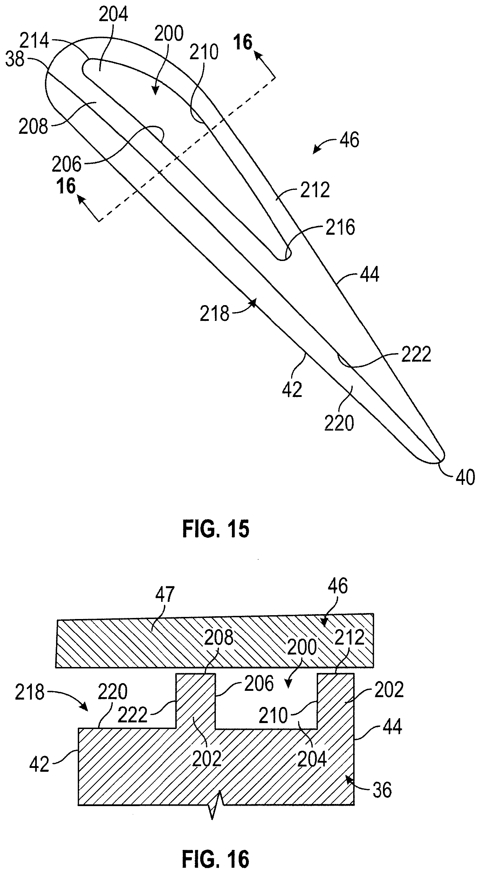

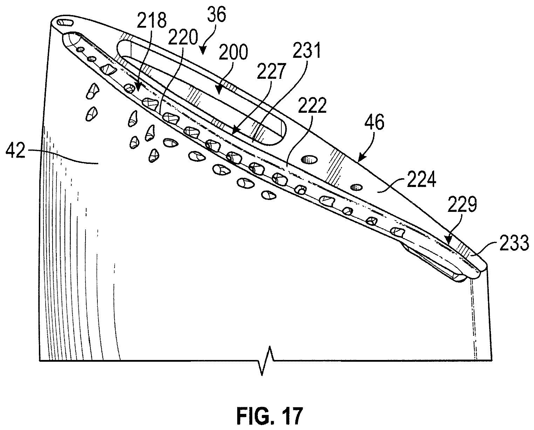

As illustrated in at least FIGS. 15-17, a top view of the tip 46 of the airfoil 36 is disclosed. Here tip 46 is configured to have a both the squealer pocket 200 and the tip shelf 218 as described herein with respect to any of the embodiments described in at least FIGS. 8-14. Again, these features are in combination with the tip vortex control technology described above with respect to at least FIGS. 1-6 and in further combination with the squealer pocket comprising a plurality of cooling openings.

While aspects contributing to the present invention or being helpful to understand the present invention have been described in detail, it should be readily understood that the present invention is only limited by the scope of the appended claims.

## Claims

1. A rotor blade (32) for a gas turbine engine (10), comprising:
an attachment (34);
an airfoil (36) extending from the attachment to a tip (46), wherein the airfoil has a stagger angle (φ; 64; 66; 82; 96) that changes as the airfoil extends between the attachment and the tip, the airfoil further comprising a base region (50) disposed adjacent to the attachment, a tip region (54), and a transition region (52) located between the base region and the tip region; wherein a rate of the change of the stagger angle (66; 82) in the transition region is greater than a rate of the change of the stagger angle (64; 66) in the base region; wherein the rate of the change of the stagger angle (66; 82) in the transition region is greater than a rate of change of the stagger angle (82; 96) in the tip region; and wherein the airfoil has a chord (48; 68; 70; 84; 98) that increases as the airfoil extends from the base region to the tip;
**characterised in that** a squealer pocket (200) is located in a surface of the tip, the squealer pocket being surrounded by a wall (202) located between the squealer pocket and a leading edge (38), trailing edge (40), pressure side (42) and suction side (44) of the airfoil, wherein a first surface (206) of the wall has a convex configuration with respect to the pressure side of the airfoil as it extends from a leading edge (38) to a trailing edge (40) of the airfoil; and
wherein the squealer pocket comprises a plurality of cooling openings.

2. The rotor blade of claim 1, wherein the squealer pocket is at least partially surrounded by a second surface (210) of the wall (202) located between the squealer pocket and a suction side (44) of the airfoil, wherein the second surface of the wall has a convex configuration with respect to the suction side of the airfoil as it extends from the leading edge to the trailing edge of the airfoil.

3. The rotor blade of claim 2, wherein the first surface and the second surface are in a facing spaced relationship with respect to each other and the squealer pocket is located between the first surface and the second surface.

4. The rotor blade of claim 2 or 3, wherein the second surface is partially curved and parallel to the suction side of the airfoil proximate to the tip.

5. The rotor blade of claim 1, wherein the tip region has a substantially planar pressure side surface (90).

6. The rotor blade of claim 1, wherein the tip region has a chord line (84; 98) and a pressure side surface (90), and wherein the chord line is substantially parallel to the pressure side surface.

7. The rotor blade of claim 5 or 6, wherein the chord increases as the airfoil extends from the attachment to the tip.

8. The rotor blade of claim 5 or 6, wherein the chord changes as the airfoil extends between the attachment and the tip, wherein a rate of change of the chord (70; 84) in the transition region is greater than a rate of change of the chord (68; 70) in the base region, and wherein the rate of change of the chord (70; 84) in the transition region is greater than a rate of change of the chord (68; 70) in the tip region.

9. The rotor blade of any of claims 5 to 8, wherein airfoil has a span, and wherein the tip region has a height (88) equal to or less than approximately 25 percent of the span.

10. The rotor blade of any of claims 5 to 9, wherein airfoil has a span, and wherein the transition region has a height (74) equal to approximately 25 percent of the span.

11. The rotor blade of any of claims 5 to 10, wherein airfoil has a span, and wherein the base region has a height (56) equal to approximately 50 percent of the span.

12. A gas turbine engine (10), comprising:
a compressor section (14);
a combustor section (16); and
a turbine section (18); wherein the turbine section includes a plurality of rotors (28) having a plurality of radially disposed rotor blades (32), at least some of the plurality of radially disposed rotor blades being a rotor blade as claimed in any preceding claim.

## Patentansprüche

1. Rotorlaufschaufel (32) für ein Gasturbinentriebwerk (10), umfassend:
eine Befestigung (34);
ein Schaufelprofil (36), welches sich von der Befestigung zu einer Spitze (46) erstreckt, wobei das Schaufelprofil einen Staffelungswinkel (φ; 64; 66; 82; 96) aufweist, welcher sich ändert, wenn sich das Schaufelprofil zwischen der Befestigung und der Spitze erstreckt, wobei das Schaufelprofil ferner einen Basisbereich (50), welcher benachbart zu der Befestigung angeordnet ist, einen Spitzenbereich (54) und einen Übergangsbereich (52) umfasst, welcher sich zwischen dem Basisbereich und dem Spitzenbereich befindet; wobei eine Änderungsgeschwindigkeit des Staffelungswinkels (66; 82) in dem Übergangsbereich größer ist als eine Änderungsgeschwindigkeit des Staffelungswinkels (64; 66) in dem Basisbereich; wobei die Änderungsgeschwindigkeit des Staffelungswinkels (66; 82) in dem Übergangsbereich größer ist als eine Änderungsgeschwindigkeit des Staffelungswinkels (82; 96) in dem Spitzenbereich; und wobei das Schaufelprofil eine Profilsehne (48; 68; 70; 84; 98) aufweist, welche sich erhöht, wenn sich das Schaufelprofil von dem Basisbereich zu der Spitze erstreckt;
**dadurch gekennzeichnet, dass** sich eine Squealer-Tasche (200) in einer Fläche der Spitze befindet, wobei die Squealer-Tasche von einer Wand (202) umgeben ist, welche sich zwischen der Squealer-Tasche und einer Vorderkante (38), Hinterkante (40), Druckseite (42) und Saugseite (44) des Schaufelprofils befindet, wobei eine erste Fläche (206) der Wand eine konvexe Konfiguration bezogen auf die Druckseite des Schaufelprofils aufweist, wenn es sich von einer Vorderkante (38) zu einer Hinterkante (40) des Schaufelprofils erstreckt; und
wobei die Squealer-Tasche eine Vielzahl von Kühlöffnungen umfasst.

2. Rotorlaufschaufel nach Anspruch 1, wobei die Squealer-Tasche mindestens teilweise von einer zweiten Fläche (210) der Wand (202) umgeben ist, welche sich zwischen der Squealer-Tasche und einer Saugseite (44) des Schaufelprofils befindet, wobei die zweite Fläche der Wand eine konvexe Konfiguration bezogen auf die Saugseite des Schaufelprofils aufweist, wenn es sich von der Vorderkante zu der Hinterkante des Schaufelprofils erstreckt.

3. Rotorlaufschaufel nach Anspruch 2, wobei die erste Fläche und die zweite Fläche in einander zugewandter beabstandeter Beziehung bezogen aufeinander sind und wobei sich die Squealer-Tasche zwischen der ersten Fläche und der zweiten Fläche befindet.

4. Rotorlaufschaufel nach Anspruch 2 oder 3, wobei die zweite Fläche teilweise gekrümmt und parallel zu der Saugseite des Schaufelprofils nahe der Spitze ist.

5. Rotorlaufschaufel nach Anspruch 1, wobei der Spitzenbereich eine im Wesentlichen ebene Druckseitenfläche (90) aufweist.

6. Rotorlaufschaufel nach Anspruch 1, wobei der Spitzenbereich eine Profilsehnenlinie (84; 98) und eine Druckseitenfläche (90) aufweist, und wobei die Profilsehnenlinie im Wesentlichen parallel zu der Druckseitenfläche ist.

7. Rotorlaufschaufel nach Anspruch 5 oder 6, wobei sich die Profilsehne erhöht, wenn sich das Schaufelprofil von der Befestigung zu der Spitze erstreckt.

8. Rotorlaufschaufel nach Anspruch 5 oder 6, wobei sich die Profilsehne ändert, wenn sich das Schaufelprofil zwischen der Befestigung und der Spitze erstreckt, wobei eine Änderungsgeschwindigkeit der Profilsehne (70; 84) in dem Übergangsbereich größer ist als eine Änderungsgeschwindigkeit der Profilsehne (68; 70) in dem Basisbereich, und wobei die Änderungsgeschwindigkeit der Profilsehne (70; 84) in dem Übergangsbereich größer ist als eine Änderungsgeschwindigkeit der Profilsehne (68; 70) in dem Spitzenbereich.

9. Rotorlaufschaufel nach einem der Ansprüche 5 bis 8, wobei ein Schaufelprofil eine Spannweite aufweist, und wobei der Spitzenbereich eine Höhe (88) aufweist, welche gleich oder weniger als etwa 25 Prozent der Spannweite ist.

10. Rotorlaufschaufel nach einem der Ansprüche 5 bis 9, wobei ein Schaufelprofil eine Spannweite aufweist, und wobei der Übergangsbereich eine Höhe (74) aufweist, welche gleich etwa 25 Prozent der Spannweite ist.

11. Rotorlaufschaufel nach einem der Ansprüche 5 bis 10, wobei ein Schaufelprofil eine Spannweite aufweist, und wobei der Basisbereich eine Höhe (56) aufweist, welche gleich etwa 50 Prozent der Spannweite ist.

12. Gasturbinentriebwerk (10), umfassend:
einen Kompressorabschnitt (14);
einen Brennkammerabschnitt (16); und
einen Turbinenabschnitt (18); wobei der Turbinenabschnitt eine Vielzahl von Rotoren (28) beinhaltet, welche eine Vielzahl von radial angeordneten Rotorlaufschaufeln (32) aufweist, wobei mindestens einige der Vielzahl von radial angeordneten Rotorlaufschaufeln eine Rotorlaufschaufel nach einem der vorstehenden Ansprüche sind.

## Revendications

1. Aube de rotor (32) pour un moteur à turbine à gaz (10), comprenant :
une fixation (34) ;
un profil aérodynamique (36) s'étendant de la fixation à une extrémité (46), dans laquelle le profil aérodynamique a un angle de décalage (φ ; 64 ; 66 ; 82 ; 96) qui change lorsque le profil aérodynamique s'étend entre la fixation et l'extrémité, le profil aérodynamique comprenant en outre une région de base (50) disposée adjacente à la fixation, une région d'extrémité (54) et une région de transition (52) située entre la région de base et la région d'extrémité ; dans laquelle une vitesse du changement de l'angle de décalage (66 ; 82) dans la région de transition est supérieure à une vitesse du changement de l'angle de décalage (64 ; 66) dans la région de base ; dans laquelle la vitesse du changement de l'angle de décalage (66 ; 82) dans la région de transition est supérieure à une vitesse de changement de l'angle de décalage (82 ; 96) dans la région d'extrémité ; et dans laquelle le profil aérodynamique a une corde (48 ; 68 ; 70 ; 84 ; 98) qui augmente lorsque le profil aérodynamique s'étend de la région de base à l'extrémité ;
**caractérisée en ce qu'**une poche d'indicateur de fuite audible (200) est située dans une surface de l'extrémité, la poche d'indicateur de fuite audible étant entourée par une paroi (202) située entre la poche d'indicateur de fuite audible et un bord d'attaque (38), un bord de fuite (40), un intrados (42) et un extras (44) du profil aérodynamique, dans laquelle une première surface (206) de la paroi a une configuration convexe par rapport à l'intrados du profil aérodynamique lorsqu'il s'étend d'un bord d'attaque (38) à un bord de fuite (40) du profil aérodynamique ; et
dans laquelle la poche d'indicateur de fuite audible comprend une pluralité d'ouvertures de refroidissement.

2. Aube de rotor selon la revendication 1, dans laquelle la poche d'indicateur de fuite audible est au moins partiellement entourée par une seconde surface (210) de la paroi (202) située entre la poche d'indicateur de fuite audible et un extrados (44) du profil aérodynamique, dans laquelle la seconde surface de la paroi a une configuration convexe par rapport à l'extrados du profil aérodynamique lorsqu'il s'étend du bord d'attaque au bord de fuite du profil aérodynamique.

3. Aube de rotor selon la revendication 2, dans laquelle la première surface et la seconde surface sont dans une relation espacée en regard l'une par rapport à l'autre et la poche d'indicateur de fuite audible est située entre la première surface et la seconde surface.

4. Aube de rotor selon la revendication 2 ou 3, dans laquelle la seconde surface est partiellement incurvée et parallèle à l'extrados du profil aérodynamique à proximité de l'extrémité.

5. Aube de rotor selon la revendication 1, dans laquelle la région d'extrémité a une surface d'intrados (90) sensiblement plane.

6. Aube de rotor selon la revendication 1, dans laquelle la région d'extrémité a une ligne de corde (84 ; 98) et une surface d'intrados (90), et dans laquelle la ligne de corde est sensiblement parallèle à la surface d'intrados.

7. Aube de rotor selon la revendication 5 ou 6, dans laquelle la corde augmente lorsque le profil aérodynamique s'étend de la fixation à l'extrémité.

8. Aube de rotor selon la revendication 5 ou 6, dans laquelle la corde change lorsque le profil aérodynamique s'étend entre la fixation et l'extrémité, dans laquelle une vitesse de changement de la corde (70 ; 84) dans la région de transition est supérieure à une vitesse de changement de la corde (68 ; 70) dans la région de base, et dans laquelle la vitesse de changement de la corde (70 ; 84) dans la région de transition est supérieure à une vitesse de changement de la corde (68 ; 70) dans la région d'extrémité.

9. Aube de rotor selon l'une quelconque des revendications 5 à 8, dans laquelle le profil aérodynamique a une envergure, et dans laquelle la région d'extrémité a une hauteur (88) égale ou inférieure à environ 25 pour cent de l'envergure.

10. Aube de rotor selon l'une quelconque des revendications 5 à 9, dans laquelle le profil aérodynamique a une envergure, et dans laquelle la région de transition a une hauteur (74) égale à environ 25 pour cent de l'envergure.

11. Aube de rotor selon l'une quelconque des revendications 5 à 10, dans laquelle le profil aérodynamique a une envergure, et dans laquelle la région de base a une hauteur (56) égale à environ 50 pour cent de l'envergure.

12. Moteur à turbine à gaz (10), comprenant :
une section de compresseur (14) ;
une section de chambre de combustion (16) ; et
une section de turbine (18) ; dans lequel la section de turbine inclut une pluralité de rotors (28) ayant une pluralité d'aubes de rotor disposées radialement (32), au moins certaines de la pluralité d'aubes de rotor disposées radialement étant une aube de rotor selon une quelconque revendication précédente.
